# EUROPEAN PATENT APPLICATION

(11) **EP 4 671 984 A1**
(43) Date of publication of application: **31.12.2025**
(21) Application number: 25181063.6
(22) Date of filing: 05.06.2025
(51) Int. Cl.: G06F 9/48, G06F 9/50, G06F 9/54, H04L 47/83, H04L 67/10, H04L 67/1019, H04L 67/1025, H04L 67/1027, H04L 67/141, H04L 67/63, G06F 9/451, A63F 13/48

(54) **SPECULATION MANAGEMENT ENGINE IN A CLOUD ACCESS MANAGEMENT SYSTEM**

(30) Priority: 26.06.2024 US 202418755539
(71) Applicant: Microsoft Technology Licensing, LLC, Redmond, WA 98052 (US)
(72) Inventor: DIXON, Zachary William, Redmond, 98052 (US); PADMANABHAN, Prasanna, Redmond, 98052 (US); PATNAIK, Sandeep, Redmond, 98052 (US); WESTON, William Lee Wayne, Redmond, 98052 (US); MCDANIEL, Paul Allan, Redmond, 98052 (US); WILLSON, Zachary Cole, Redmond, 98052 (US)
(74) Representative: CMS Cameron McKenna Nabarro Olswang LLP

(57) **Abstract**

Methods, systems, and computer storage media for providing speculation management using a speculation management engine of a cloud access management system are described. The speculation management engine operates based on speculation data, a multi-dimensional speculation framework, and two sets of operations defined based on an initialization sequence. In operation, speculation data for a user associated with a local client is accessed. A determination of a plurality of speculated remote resource candidates is made, based on the speculation data associated with the user. Execution of a first set of operations (i.e., remote resource resolution) and a second set of operations (i.e., remote resource connection configuration) are triggered. A determination is made whether a remote resource identified from the remote resource resolution matches a speculated remote resource candidate in the plurality of speculated remote resource candidates. Based on the speculated remote resource candidate, a connection for accessing a remote resource is established.

## Description

### BACKGROUND

Users rely on computing environments with applications and services to accomplish computing tasks. Distributed computing systems and/or cloud computing platforms host and support different types of applications and services in managed computing environments. In particular, a cloud computing platform can implement a cloud access management system that provides access management functionality for different types of cloud computing offerings. For example, a cloud access management system can provide local clients access to remote clients - including managed desktop services that include virtual machines assigned to individual users as virtual desktop devices configured with productivity, security, and collaboration tools.

### SUMMARY

Various aspects of the technology described herein are generally directed to systems, methods, and computer storage media for, among other things, providing speculation management using a speculation management engine of a cloud access management system. Cloud access management supports access management operations for providing remote client sessions between local clients and remote clients to enable users to seamlessly access cloud-based resources. The speculation management engine operates based on speculation data (e.g., user data, local client data, and remote resource data) and a multi-dimensional speculation framework (i.e., speculation logic) that are both used to predict or speculate which remote resource (i.e., speculated remote resource) a user wants to access from a local client.

The speculation management engine also operates based on partitioned operations (e.g., a first set of operations and a second set of operations) of a remote connection initialization sequence. The first set of operations (i.e., remote resource resolution operations) and the second set of operations (i.e., remote resource connection configuration operations) support establishing a connection to access a remote resource. The partitioned operations are strategically executed (e.g., in parallel) to resolve a remote client protocol file, while preemptively configuring a connection to a speculated remote source. In this way, the speculation management engine can operate to enable local clients to more efficiently (e.g., instantly and timely) connect to remote clients and other cloud-based resources.

Conventionally, cloud access management systems are not configured with comprehensive computing logic and infrastructure to efficiently provide instant and timely connectivity to cloud-based resources. By way of illustration, orchestrating a connection to a remote resource can be based on a remote connection initialization sequence. The remote connection initialization sequence can include operations associated with authentication, information retrieval and processing, and connection management. For example, a user can be authenticated to a cloud-based service (e.g., WINDOWS 365 services); and then authenticated to a remote resource management service (e.g., virtual desktop services); - and then finally authenticated and connected to a remote client. In some situations, if the remote client is not active, access to the remote client can be delayed in order to boot and prepare a virtual machine (VM) for the remote connection. After the VM is initialized, the remote connection is established for a remote client session.

In this way, communications protocols used to connect local clients to remote clients may introduce overhead, leading to slower connection times. The establishment of connection sessions can also cause delays, as each attempt requires additional overhead to negotiate session parameters and perform necessary operations. This overhead becomes particularly significant in scenarios involving frequent connection attempts, exacerbating delays in the connection process. As such, a remote resource connection management solution is necessary to ensure improved performance for computing functionality and user satisfaction associated with reduced connection times of local clients to remote resources.

A technical solution - to the limitations of conventional cloud access management systems -includes providing speculation management resources via a speculation management engine that enables reduced connection times and improved performance of remote client sessions. A remote connection initialization sequence can be partitioned into a first set of operations (i.e., remote resource resolution operations) associated with resolving a remote resource and a second set of operations (i.e., remote resource connection configuration operations) associated with establishing a connection for a remote resource. A multi-dimensional speculation framework (i.e., speculation logic) is applied to aggregated speculation data of a user and a local client, where the multi-dimensional speculation framework supports making an informed prediction as to what remote resource (i.e., speculated remote resource candidate) that a user intends to access.

Upon identifying the speculated remote resource candidates, the remote resource resolution operations and remote resource connection configuration operations are executed in parallel. The remote resource resolution operation identifies a particular remote resource that a user will connect to, and the remote resource connection configuration operations preemptively configure remote resource connections for speculated remote resource candidates. A determination is made whether a speculated remote resource is correct (i.e., matches the particular remote resource). If the speculated remote resource is correct, the connection is made based on a pre-configured connection for the speculated remote resource; however, if the speculated remote resource is incorrect, a remote protocol file that identifies that is associated with the correct remote resource is used to complete a second set of remote resource connection configuration operations.

In operation, in a first embodiment, speculation data for a user associated with a local client is accessed. A determination of a plurality of speculated remote resource candidates is made, based on the speculation data. Execution of a first set of operations and a second set of operations is triggered. The first set of operations is associated with remote resource resolution, and the second set of operations is associated with remote resource connection configuration. The second set of operations is executed for each of the plurality of speculated remote resource candidates. Based on executing the first set of operations and the second set of operations, a determination is made as to whether a remote resource identified from the remote resource resolution operations matches a speculated remote resource candidate in the plurality of speculated remote resource candidates. Based on determining that the speculated remote resource candidate matches the remote resource, a connection for accessing the remote resource is established.

In a second embodiment, a user associated with a local client is identified. The local client application enables access to remote resources. A determination is made that speculation data for the user does not exist. The speculation data enables establishing speculative remote resource connections. Data associated with a user is stored. The data includes speculation data that enables speculation management based on execution of a first set of operations and a second set of operations. The first set of operations is associated with remote resource resolution, and the second set of operations is associated with remote resource connection configuration. The second set of operations is executed for each of the plurality of speculated remote resource candidates.

In a third embodiment, speculation data associated with a user is accessed. At least one speculated remote resource candidate is identified based on the speculation data. Execution of a first set of operations and a second set of operations is triggered. The first set of operations is associated with remote resource resolution, and the second set of operations is associated with remote resource connection configuration. A connection for a remote client session is established based on a speculated remote resource associated with the at least one speculated remote resource candidate.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIG. 1A is a block diagram of an exemplary cloud access management system including a speculation management engine, in accordance with aspects of the technology described herein;
FIGS. 1B and 1C are speculation management schematics of an exemplary cloud access management system including a speculation management engine, in accordance with aspects of the technology described herein;
FIGS. 2A and 2B are flow diagrams associated with an exemplary cloud access management system including a speculation management engine, in accordance with aspects of the technology described herein;
FIG. 3 provides a first exemplary method of providing speculation management using a speculation management engine, in accordance with aspects of the technology described herein;
FIG. 4 provides a second exemplary method of providing speculation management using a speculation management engine, in accordance with aspects of the technology described herein;
FIG. 5 provides a third exemplary method of providing speculation management using a speculation management engine, in accordance with aspects of the technology described herein;
FIG. 6 provides a block diagram of an exemplary cloud access management system suitable for use in implementing aspects of the technology described herein;
FIG. 7 provides a block diagram of an exemplary distributed computing environment suitable for use in implementing aspects of the technology described herein; and
FIG. 8 provides a block diagram of an exemplary computing environment suitable for use in implementing aspects of the technology described herein.

### DETAILED DESCRIPTION

### OVERVIEW

A cloud access management system provides access management functionality for different types of cloud computing offerings. The cloud access management system can be a centralized platform designed to facilitate secure and efficient access to cloud-based resources from various devices, including traditional desktops, laptops, and thin clients. The cloud access management system can include software, hardware, and infrastructure components that enable users to authenticate, connect, and interact with remote resources hosted in the cloud. The cloud access management system manages operations associated with user identities, permissions, and access policies to ensure that only authorized users can access specific resources. Additionally, it may incorporate features such as single sign-on (SSO), multi-factor authentication (MFA), and session management to enhance security and user experience.

Conventionally, cloud access management systems are not configured with comprehensive computing and logic and infrastructure to efficiently provide instant and timely connectivity to cloud-based resources. By way of illustration, orchestrating a connection to a remote resource often involves a sequence of steps for remote connection initialization. This sequence typically includes authentication, information retrieval and processing, and connection management operations. For instance, a user may undergo processing and authentication for a cloud-based service (e.g., WINDOWS 365 services), followed by processing and authentication for a remote resource management service (e.g., virtual desktop services), and finally authentication and access to a remote client. In cases where the remote client is inactive, the virtual machine (VM) is booted and prepared for a remote connection - which causes additional delays in accessing a remote resource.

As illustrated, the communications protocols that are used for connecting local clients to remote clients can introduce overhead, which in turn can slow down connection times. Connection session establishment can also cause delays because each connection attempt requires additional overhead to establish the new session. For example, a server and client may need to negotiate session parameters or perform other operations that prolong the connection process. This overhead can become particularly significant in scenarios where frequent connection attempts are made. Additionally, if resource mapping or translation is required between the local and remote environments, additional processing time may be needed, especially for complex datasets. Mitigating these delays entails optimizing resource sharing mechanisms and minimizing latency to enhance the efficiency of remote client sessions. As such, a comprehensive cloud access management system - with an alternative basis for performing cloud access management operations - can improve computing operations and interfaces in cloud access management systems.

### DESCRIPTION OF TECHNICAL SOLUTION

At a high level, speculation management resources can support providing speculation management for connections to remote resources associated with a user to reduce connection times to cloud-based resources. The speculation management engine can refer to a component that enables speculative remote resource connections to cloud-based resources based on speculation management resources (e.g., operations, interfaces, data, and logic). The speculation management engine provides different types of speculation management operations (e.g., local-client operations) for reduced connection times and improved performance for remote client sessions. The local-client operations are associated with a user and a local client, where speculation data is aggregated for the user and local client, and speculation logic is employed to identify speculated remote resource candidates for speculative remote resource connections.

The speculative remote resource connections can be based on speculated remote resource candidates that include partial remote resource connections that the speculation management engine configures in advance of determining a particular remote resource of a user. The speculation management engine can support a multi-dimensional speculation framework (i.e., speculation logic) associated with different approaches (e.g., remote client specification matching approach, schedule-based approach, location-based approach, default remote client approach, last connected remote client approach) for identifying speculated remote resource candidates. A speculated remote resource candidate can be identified based on the aggregated speculation data; the speculation data is used in speculative processes associated with a wide range of data types associated with the different approaches.

Upon identifying the one or more speculated remote resources, two sets of operations (i.e., remote resource resolution operations and remote resource connection configuration operations) can be triggered. The remote resource resolution operations are executed to identify a particular remote resource that will be employed, and remote resource connection configurations are executed for speculated remote resources that may match the particular remote resource. When the particular remote resource matches a speculated remote resource, the speculated remote resource connection that was preemptively configured can be employed to complete a remote client connection initialization sequence. Speculating remote resources can help speed up loading time of remote resources and provide a strategy to improve responsiveness and efficiency in accessing remote resources by proactively anticipating user needs.

Advantageously, the embodiments of the present technical solution include several inventive features (e.g., operations, systems, engines, and components) associated with a cloud access management system having a speculation management engine. The speculation management engine supports aggregating speculation data (e.g., user data, local client data, remote resource data) and employing a multi-dimensional speculation framework to identified remote resource connection candidates. The speculation management engine strategically executes partitioned operations (i.e., remote resource resolution operations and remote resource connection configuration operations) to resolve a remote client protocol file, while preemptively configuring a connection to a speculated remote source; such that, a preemptively configured remote resource connection is employed for a speculated remote resource when the speculated remote resource is correct. In this way, the speculation management engine can operate to enable local clients to more efficiently (e.g., instantly and timely) connect to remote clients and other cloud-based resources. The speculation management resources are a solution to a specific problem (e.g., limitations in instant and timely connections to remote clients and cloud-based resources). Moreover, the speculation management engine can support different speculation approaches (e.g., remote client specification matching approach, schedule-based approach, location-based approach, default remote client approach, last connected remote client approach and corresponding speculation data) that are executed based on corresponding speculation data.

### EXAMPLE SYSTEMS AND RESOURCES

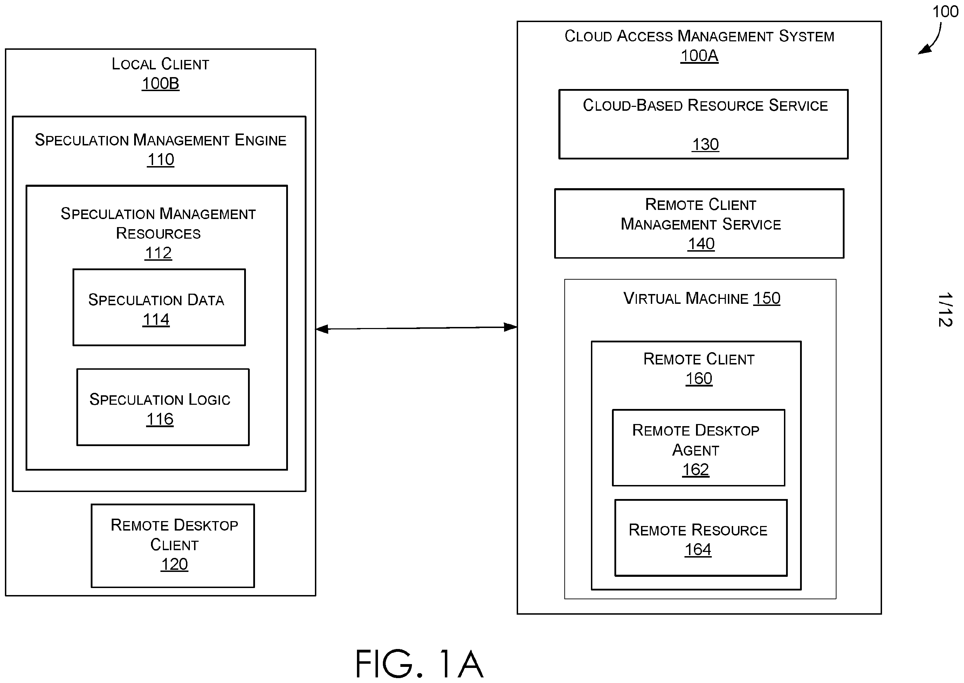

Aspects of the technical solution can be described by way of examples and with reference to FIGS. 1A - 1C. FIG. 1A illustrates a cloud computing environment (system) 100, cloud access management system 100A, local client 100B, speculation management engine 110, speculation management resources 112, speculation data 114, speculation logic 116, remote desktop client 120; cloud-based resource service 130, remote client management service 140, virtual machine 150, remote client 160, remote desktop agent 162, and remote resource 164.

The cloud access management system 100A provides a centralized platform designed to facilitate secure and efficient access to cloud-based resources (e.g., remote clients). The local client 100B provides access to the cloud access management system 100A and cloud-based resources (e.g., remote client 160 and/or remote resource 164). The local client may support boot-to-cloud functionality that includes directly booting into a cloud-based remote client, operating system or environment instead of a traditional local operating system installed on its internal storage.

The cloud-based resource service 130 can provide a cloud-based virtualization solution and the remote client management service 140 can provide desktop and application virtualization services. The remote resource management service 140 provides a control plane (e.g., a virtual desktop control plane) that operates as a centralized management and administration infrastructure service that is responsible for managing user sessions, virtual machines, networking, authentication, and other aspects of a virtual desktop environment.

Virtual machine 150 is a representative virtual machine (VM) that is provisioned to serve as a session host for users accessing desktops and applications remotely. A VM can run an operating system (e.g., WINDOWS) and is configured with the necessary resources, such as CPU, memory, storage, and network connectivity, to support multiple concurrent user sessions. VMs are managed and maintained to ensure scalability, reliability, and performance for the desktop virtualization environment.

A local client (e.g., local client 100B) connects to a remote client (e.g., remote client 160) to access cloud-based resources. The local client 100B can include speculation management resources 112 including speculation data 114 and speculation logic 116; and remote desktop client 120 that enable speculation management functionality on the local client 100B. The local client 100B runs remote desktop client 120 that enables users to access and control a remote client 160 and remote resource 164.

The speculation management resources 112 can include operations, interfaces, and data components that support speculation management functionality. Operations encompass speculative resource access, prefetching, speculation handling, machine learning, resource caching, and speculation timeout mechanisms. These operations are facilitated through interfaces such as speculation management, remote resource access, cache management, machine learning integration, and user interaction interfaces. Data components include speculation metadata, cached resource data, user interaction data, and speculation policies, which collectively inform speculation management decisions. Through these interconnected elements, the speculation management engine 110 aims to optimize resource utilization, reduce latency, and enhance user experience by intelligently anticipating and managing access to remote resources.

By way of illustration, the speculation management engine 110 identifies a user associated with a local client (e.g., local client 110B). Identifying a user associated with the local client 110B may be triggered by detecting initialization of a local application (e.g., remote desktop client 120) of the local client 110B. The local client 110B enables access to remote resources. The speculation management engine 110 may determine that speculation data 114 does not exist for the user. The speculation data 114 enables establishing speculated remote resource connections. The speculation management engine 110 stores data associated with user. The data is stored as speculation data (e.g., speculation data 114) that enables speculation management. Speculation management 114 is based on execution of a first set of operations and a second set of operations. The first set of operations is associated with remote resource resolution and the second set of operations is associated with remote resource connection configuration.

The speculation management engine 110, in another embodiment, already includes speculation data 114 aggregated for a user to support performing speculation management. The speculation management engine 110 accesses speculation data 114 for a user associated with local client 100B. The speculation data 114 is associated with a multi-dimensional speculation framework. The multi-dimensional framework includes two or more speculation approaches. Each speculation approach is associated with corresponding speculation data 114 that enables performing the approach. The speculation approaches are selected form the following: a remote client specification approach; a schedule-based approach a location-based approach; a default remote client approach; and a last connected remote client approach.

In a first approach (i.e., remote client specification matching), the speculation management engine 110 identifies a local application history as speculation data 114. The local application history identifies applications that have been previously been accessed by the user. Based on the local application history, a speculated remote resource can be identified. For example, a machine learning model service can be used to understand the most frequently used applications of a user. An estimated typical system requirements profile of a remote client for the frequently used applications of the user can be generated. The typical system requirements profile can include RAM (Random Access Memory), CPU (Central Processing Unit), GPU (Graphics Processing Unit) and other computing components of a remote client that can support the frequently used applications of the user. A speculated remote resource connection can be generated to a remote resource that most closely matches the estimated typical system requirements profile.

In a second scenario (i.e., schedule-based approach), the speculation management engine 110 stores speculation data 114 that indicates a schedule of a user. The cached data can be used to identify a speculated remote resource based on the speculated remote resource being a resource that was accessed at given time of the day and/or day of the week. For example, the speculation management engine 110 may speculate to connect to a development environment during morning hours; however, speculate to connect to a personal remote client at evening hours.

In a third scenario (i.e., location-based approach), the speculation management engine 110 stores speculation data 114 that indicates the last remote client that the user connected to from a particular location. The cached location data is used to identify a speculated remote resource. A coarse current location of a user can be matched to cached location data of the user, and based on a match, a speculated remote resource is identified based a previous remote resource associated with the cached location data. For example, the speculation management engine 114 may speculate to connect to a development environment when a user is at the office; however, speculate to connect to a personal remote client when the user is at home.

In a fourth approach (i.e., last connected remote client), the speculation management engine 110 stores speculation data 114 that indicates the last remote client to which a user connected. The last remote client can be stored as speculation data 114 (e.g., remote resource data) that can facilitate expediting future connections. Remote resource data may include user credentials, connection settings, remote desktop session information, network configuration, display settings, application preferences, security certificates, and/or remote desktop gateway information.

In a fifth approach (i.e., default remote client approach), the speculation management engine 110 stores speculated data 114 that indicates a default remote client for the user. The default remote client has been identified by the user or an administrator as a default remote resource to use, such that the default remote resource is the speculated remote resource.

The speculation approaches are associated with corresponding speculation data 114 as described above. The speculation data 114 can include: a local application history; an estimated typical system requirements profile; a machine learning model; a user schedule; a user location; remote resource data; a last connected remote client, and/or a default remote client.

The speculation management engine 110 determines a plurality of speculated remote resource candidates. The speculation management engine 110 also de-duplicates any duplicate speculation remote resource candidates identified in the plurality of speculated remote resource candidates.

The speculation management engine 110 triggers execution of the first set of operations (i.e., remote resource resolution operations) and the second set of operations (i.e., remote resource connection configuration). The second set of operations are executed for each of the plurality of speculated remote resource candidates. The remote resource resolutions operations and the remote resource connection operations can be executed in parallel. In other words, the first set of operations and the second set of operations can be executed in parallel.

The speculation management engine 110 triggers generating connections for each of the speculated remote resource candidates, while a particular remote resource is identified. The remote resource can be identified based on a user selecting connect to a particular remote resource; or while waiting for a feed discovery - that identifies a remote resource in a non-user interactive scenario - to be completed.

Based on executing the first set of operations and the second set of operations, the speculation management engine 110 determines whether a remote resource identified from the remote resource resolution matches a speculated remote resource candidate in the plurality of speculated remote resource candidates. Determining whether the remote resource identified from the remote resource resolution matches the speculated remote resource candidate in the plurality of speculated remote resource candidates is triggered based on a user indication to connect to the remote resource. For example, once the user selects "Connect" or when feed discovery has been completed, the speculation management engine 110 then evaluates which of the speculated remote resource connections were correct, and if one was correct, the connection is selected and all the other speculated connections are terminated in the background. If none of the speculations were correct, then a remote resource connection configuration is initialized for the correct remote resource. The speculation management engine 110 establishes a connection for the remote resource. The remaining speculated remote resource connections associated with executing the remote resource connection configuration are terminated.

In another embodiment, the speculation management engine 110 determines that the remote resource identified from the remote resource resolution does not match a speculated remote resource candidate in the plurality of speculated remote resource candidates. Based on determining that the remote resource does not match, the speculation management engine 110 executes the second set of operations to connect to the remote resource. Based on executing the second set of operations, a connection for the remote resource is established. The speculated remote resource connections associated with executing the remote resource connection configuration are terminated.

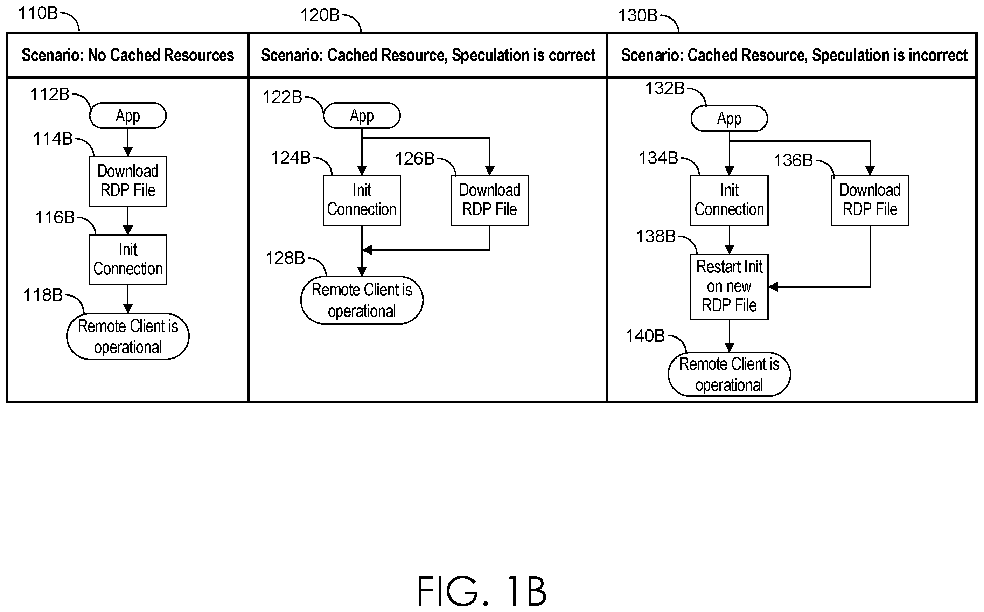

With reference to FIG. 1B, FIG. 1B illustrates three scenarios (i.e., scenario 110B, scenario 120B, and scenario 130B) associated with speculation management. For scenario 110B, no cached resources (i.e., speculation data) exist. At block 112B, the local client application ("app") can be initialized. The local client application facilitates remote access to remote resources (e.g., desktops, applications, files, and devices). At block 114B, a remote desktop protocol (RDP) file is downloaded. The RDP file can refer to a configuration file that specifies the settings of the remote desktop connection. The RDP file can contain information such as an IP address, hostname of remote computer, user credentials, display settings, and other connection options. Because no cached resources exist, a connection is initialized at block 116B, and then at block 118B, a remote client is operational (e.g., an interface associated with a remote client is generated) for a remote resource.

For scenario 120B, a cached resource exists and a speculated remote resource is correct. In operation, at block 122B, the local client application is initialized; a connection is initialized at block 124B, and in parallel, at block 126B, an RDP file is downloaded. Then at block 128B, the remote client is operational for the speculated remote resource.

For scenario 130B, a cached resource exists, but a speculated remote resource is incorrect. In operation, at block 132B, the local client application is initialized; a connection is initialized at block 134B, and in parallel, at block 136B, an RDP file is downloaded. Then, at block 138B, because the speculated remote resource is incorrect, initialization is restarted with a second RDP file of a second remote resource (i.e., the correct remote resource). And, at block 140B, the remote client is operational for the speculated remote source.

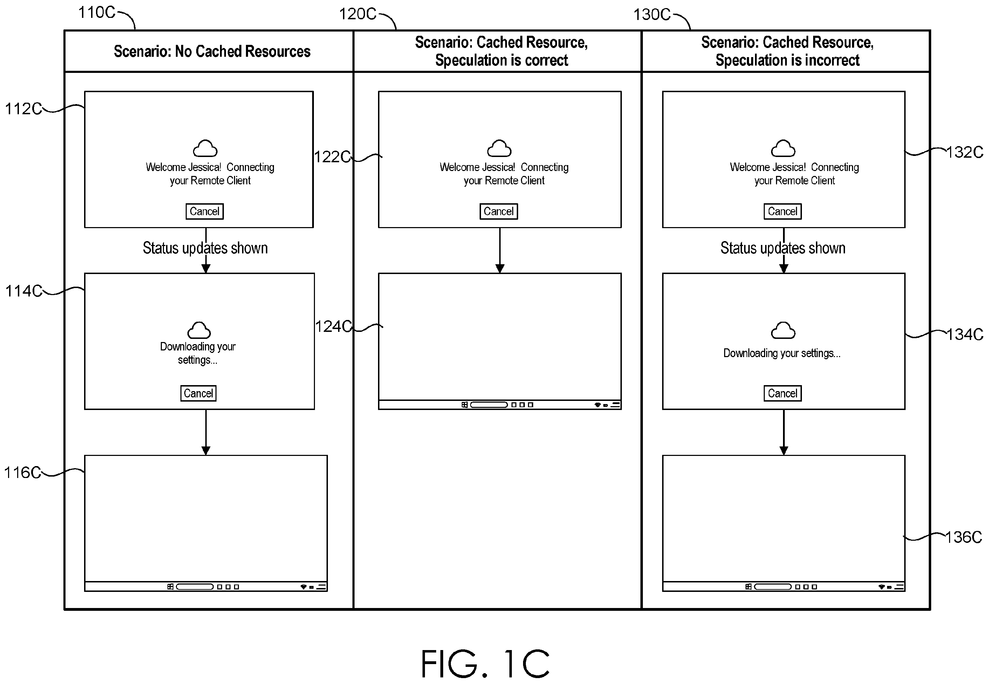

With reference to FIG. 1C, FIG. 1C illustrates graphical user interface scenarios (i.e., GUI 110C, GUI 120C, and GUI 130C) that correspond to scenario 110B, scenario 120B, and scenario 130B. For GUI 110C, after the local application is launched, a GUI 112C is provided and transitioned to GUI 114C that includes a status update. The status update may be a notification that provides current information about execution progress for remote resource resolution operations and remote resource connection configuration operations. Upon completion of the execution, GUI 116C of the remote client is provided. GUI 114C is associated with the delay in initializing the connection. For GUI 120C, after the local application is launched, GUI 122C of the remote client is provided. A status update is not provided as the connection is expedited based on the cached resource. For GUI 130C, after the local application is launched, a GUI 132C is provided and transitioned to GUI 134C that includes a status update. The status update may be a notification that provides current information about execution progress for remote resource resolution operations and remote resource connection configuration operations when a speculated remote resource is incorrect. Upon completion of the execution. GUI 136C of the remote client is provided. GUI 134C is associated with the delay in initializing the connection because the speculated remote resource was incorrect.

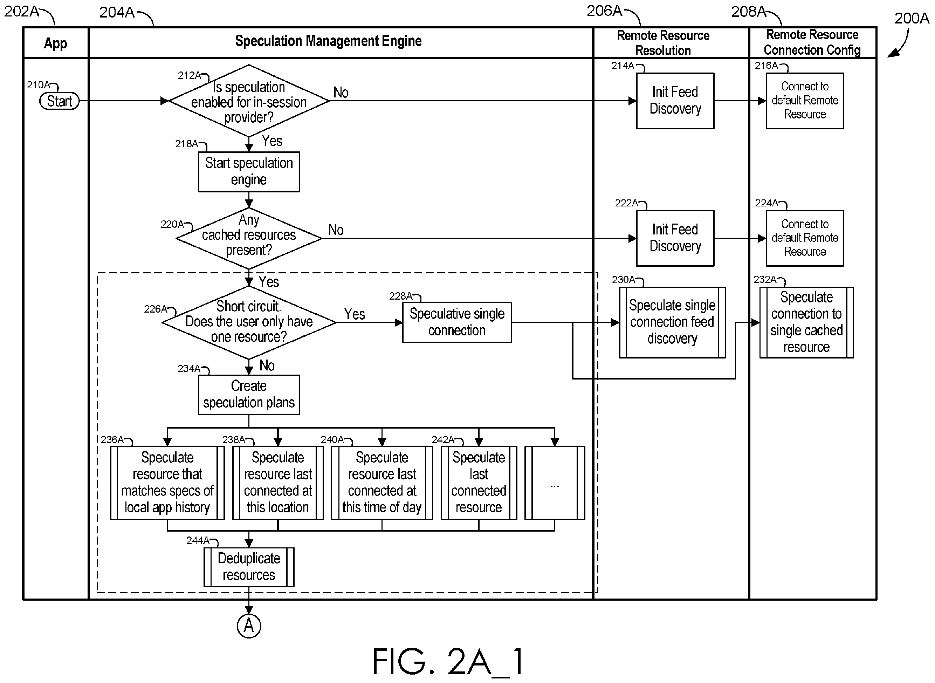

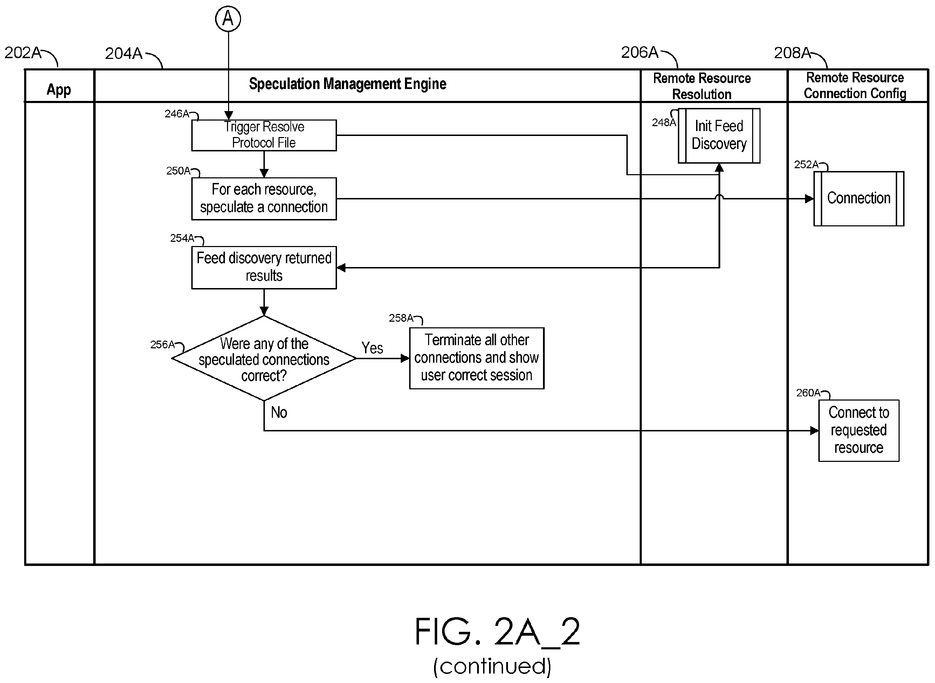

With reference to FIG. 2A, FIG. 2A (shown as 2A_1 and 2A_2 continued) illustrates cloud computing environment 200A that includes local application ("app") 202A, speculation management engine 204A, remote resource resolution 206A, and remote resource connection configuration (config) 208A. Remote resource resolution 206A and remote resource connection config 208A represent partitioned operations of a remote resource connection initialization sequence.

At block 210A, local application 202A associated with connecting to a remote resource (e.g., remote client) is initialized. At block 212A, a determination is made whether speculation is enabled. For example, a determination is made whether speculation is enabled for the in-session provider, where the speculation functionality is offered or accessible specifically within the confines of the active session.

At block 214A, based on determining that speculation is not enabled, feed discovery is initialized. Feed discovery can refer to the process of discovering and accessing resources or services available on a remote server or network for establishing a connection with a remote resource. Feed discovery can include identifying and accessing available resources or applications on a remote host or server that a user can access during a remote session. At block 216A, a connection is established to a default remote resource. Remote resources can include remote applications, files and folders, and a remote client.

Alternatively, a determination can be made at block 212A that speculation is enabled. At block 218A, based on determining that speculation is enabled, the speculation management engine is initialized. At block 220A, a determination is made whether speculation data is present (e.g., determining if any cached resources are present). Speculation data can include cached resources associated with the user and/or the local client. At block 222A, based on determining that speculation data is not present, feed discovery is initialized. And at block 224A, a connection is established to a default remote resource.

Alternatively, a determination can be made at block 220A that speculation data is present. At block 226A, based determining that speculation data is present, using the speculation data, a determination is made whether the user is associated with a single resource (i.e., short circuit approach when a user has only one resource). At block 228A, based on determining that the user is associated with the single resource, a single connection is speculated based on the single resource. At block 230A, feed discovery is initialized for the single connection. At block 232A, a speculated connection is established for the single resource. The single resource can be a cached resource.

Alternatively, a determination can be made at block 226A that the speculation data is not associated with a single resource - that is, that the speculation data is associated with multiple resources. At block 234A, based on determining that the speculation data is not associated with the single resource, a plurality of speculation plans are created. At block 236A, a first speculated remote resource candidate is identified based on remote resource specifications that are the closest match to the requirements of the local application history. At block 238A, a second speculated remote resource candidate is identified based on a last connected remote resource at the location of the user. At block 240A, a third speculated remote resource candidate is identified based on a schedule (e.g., time of day) of the user. At block 242A, a fourth speculated remote resource is identified based on a last connected resource. At block 244, duplicate resources are de-duplicated.

At block 246A, trigger resolve protocol file. At block 248A, feed discovery is initialized. At block 250A, for each speculated remote resource candidate, initialization of a speculated connection is triggered. At block 252A, for each speculated remote resource, a speculated connection is initialized.

At block 254A, feed discovery results are received. At block 256A, a determination is made whether any of the speculation connections are correct. At block 256A, based on determining that one of the speculation connections is correct, all other speculation connections are terminated and a remote resource interface is provided based on the correct speculated connection.

Alternatively, a determination can be made at block 254A that none of the speculated connections are correct. At block 260A, based on determining that none of the speculated connections are correct, a connection is made to the actual remote resource.

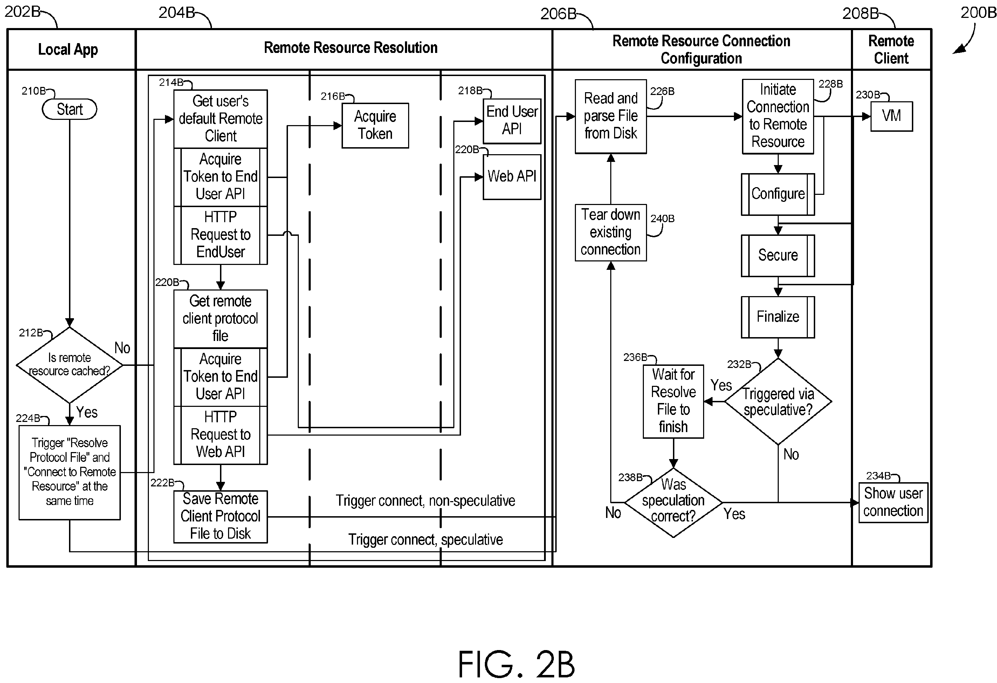

With reference to FIG. 2B, FIG. 2B illustrates a cloud computing system 200 that includes local application (local app) 202B, remote resource resolution 204B, remote resource connection configuration 206B, and remote client 208B.

At block 210B, the local client application 202B is initialized. At block 212B, a determination is made whether a cached resource exists (e.g., a last remote resource is cached). Based on determining that a cached resource does not exist, a remote client protocol file is saved (e.g., save remote client protocol file to disk). Remote resource resolution operations enable saving the remote client protocol file to disk. Initially, at block 214B, executing a command to retrieve a user's default remote client (e.g., get user's default remote client). The command can include acquiring a token of an End User API and executing an HTTP request to the End User API. At block 216B, the token is acquired; and at block 218B, the End User API is accessed. The remote resource resolution operations further include, at block 220B, executing a command to retrieve the remote client protocol file (e.g., get remote client protocol file). The command can include acquiring a token to the End User API and executing an HTTP request to a Web API. At block 216B, the token is acquired; and at block 220B, the Web API is accessed. At block 222B, the remote client protocol file is saved to disk.

The process flow (i.e., trigger connect, non-speculative) continues at block 226B, where the remote client protocol file is read and parsed. At block 228B, a connection with a remote resource is initiated based on communications (e.g., configure, secure, and finalize) with a virtual machine (VM) at block 230B. At block 232B, a determination is made whether the connection is a speculative connection. At block 234B, based on determining that the connection is not speculative, the connection is established (e.g., show user connection).

Alternatively, returning to block 212B, it may be determined that a cached resource exists. At block 224A, based on determining that a cached resource exists, two sets of operations (i.e. remote resource resolution operations "Resolve Protocol File" and remote resource connection configuration operations "Connect to Remote Resource") are trigged to run in parallel. The remote resource resolution operations set of operations at blocks 214B, 216B, 218B, 220B, and 222B are executed - as previously discussed - to save a remote client file. In parallel, the connect to remote resource set of operations are executed (i.e., trigger connect, speculative) including at block 226B, reading and parsing remote client protocol files for a speculated remote resource; and at block 228B, a connection to a remote resource is initiated via communications with a VM, at block 230B. At 232B, a determination is made that the connection is speculative. At block 236B, in this scenario, based on determining that the connection is speculative, a waiting period is initiated for the resolve remote protocol file set of operations to be completed.

At block 238B, a determination is made whether the speculation was correct. At block 234B, a determination is made that the speculation was correct, and the connection is established. Alternatively, a determination can be made that the speculation was not correct. At block 240B, based on the determination the speculation was not correct, the existing connection for the speculated connection is torn down, and the process flow returns to block 226B, to read and parse a remote protocol file from 224B; and executing blocks 228B, 230B, 232B, and 234B.

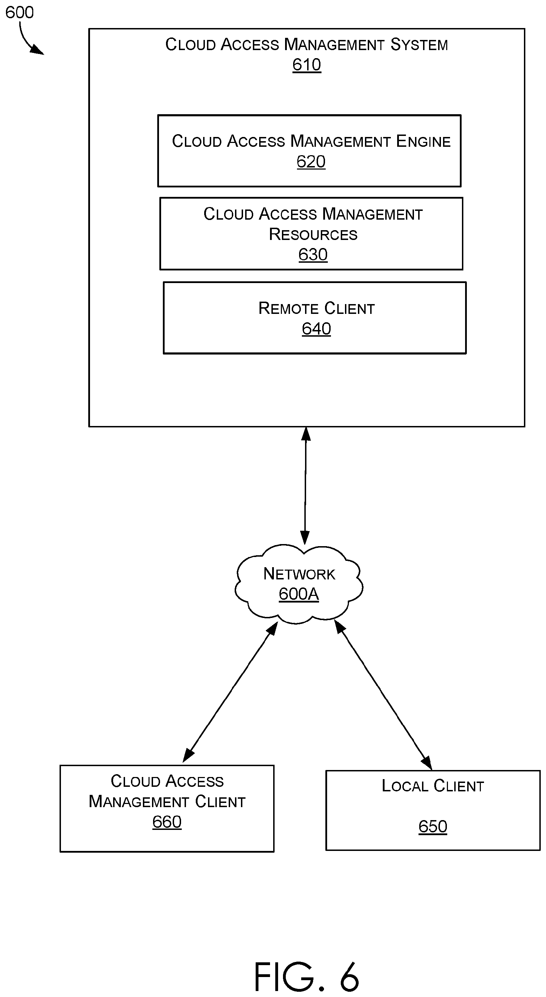

Aspects of the technical solution have been described by way of examples and with reference to FIGS. 1A, 1B, 1C, 2A and 2B. FIG. 1A is a block diagram of an exemplary technical solution environment, based on example environments described with reference to FIGS. 6, 7 and 8 for use in implementing embodiments of the technical solution are shown. Generally the technical solution environment includes a technical solution system suitable for providing the example cloud computing system 100 in which methods of the present disclosure may be employed. In particular, FIG 1A illustrates a high level architecture of the cloud computing system 100 in accordance with implementations of the present disclosure, among other engines, managers, generators, selectors, or components not shown (collectively referred to herein as "components").

### EXAMPLE METHODS

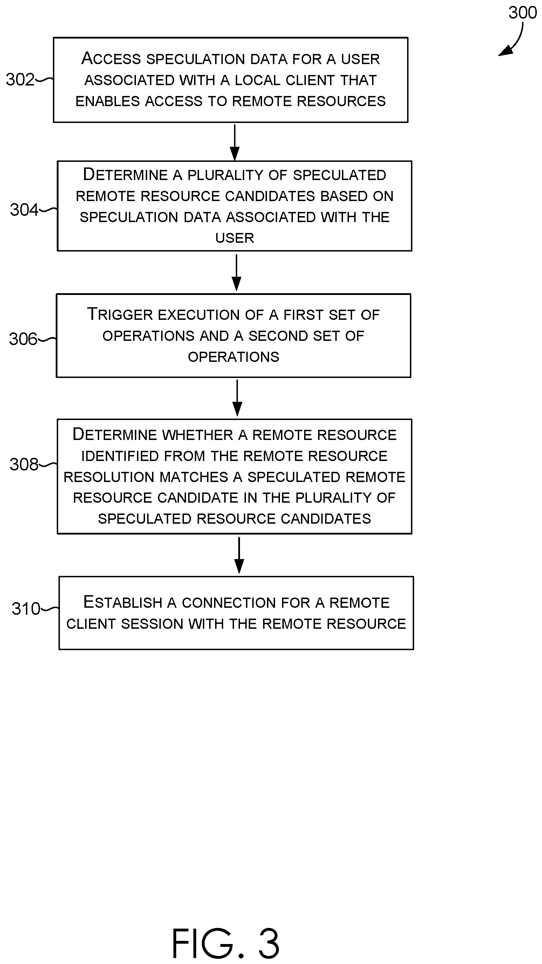

With reference to FIGS. 3, 4, and 5, flow diagrams are provided illustrating methods for providing speculation management using a speculation management engine in a cloud access management system. The methods may be performed using the cloud access management system described herein. In embodiments, one or more computer-storage media having computer-executable or computer-useable instructions embodied thereon that, when executed, by one or more processors can cause the one or more processors to perform the methods (e.g., computer-implemented method) in the cloud access management system (e.g., a computerized system).

Turning to FIG. 3, a flow diagram is provided that illustrates a method 300 for providing speculation management using a speculation management engine in a cloud access management system. At block 302, access speculation data for a user associated with a local client that enables access to remote resources. At block 304, determine a plurality of speculated remote resource candidates based on speculation data associated with the user. At block 306, trigger execution of a first set of operations and a second set of operations. The first set of operations are associated with remote resource resolution, and the second set of operations are associated with remote resource connection configuration. The second set of operations are executed for each of the plurality of remote resource candidates. At block 308, establish a connection for a remote client session based on determining that the speculated remote resource candidate matches the remote resource.

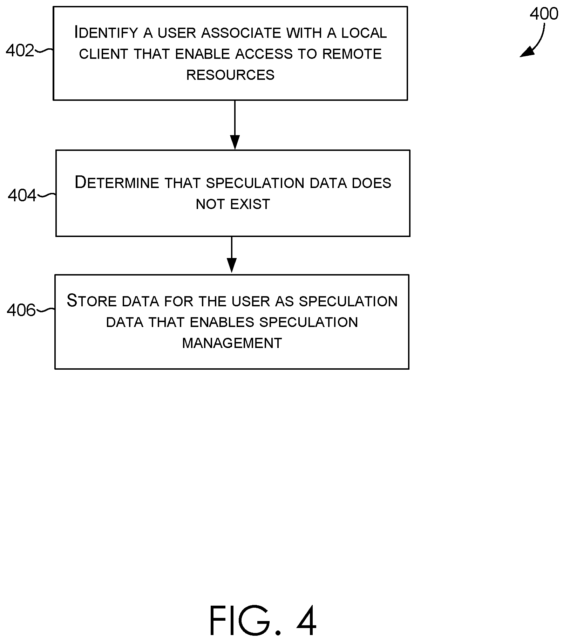

Turning to FIG. 4, a flow diagram is provided that illustrates a method 400 for providing speculation management using a speculation management engine in a cloud access management system. At block 402, identify a user associated with a local client that enables access to remote resources. At block 404, determine that speculation data does not exist. At block 406, store data associated with the user. The data is stored as speculation data that enables speculation management based on execution of a first set of operations and a second set of operations, the first set of operations are associated with remote resource resolution, and the second set of operations are associated with remote resource connection configuration.

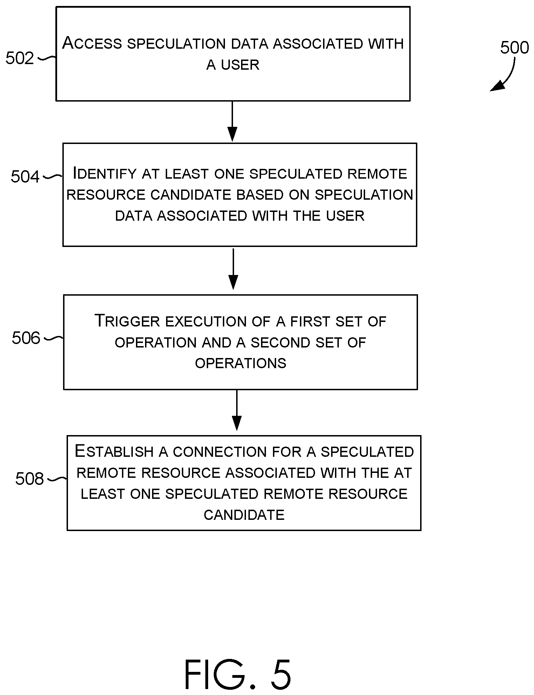

Turning to FIG. 5, a flow diagram is provided that illustrates a method 500 for providing speculation management using a speculation management engine in a cloud access management system. At block 502, access speculation data associated with a user. At block 504, based on the speculated data, identify at least one speculated remote resource candidate based on speculation data associated with the user. At block 506, trigger execution of a first set of operations and a second set of operations based on the at least one speculated remote resource candidate. The first set of operations are associated with remote resource resolution, and the second set of operations are associated with remote resource connection configuration. The second set of operations are executed for each of the plurality of remote resource candidates. At block 508, establish a connection for a speculated remote resource associated with the at least one speculated remote resource candidate.

### TECHNICAL IMPROVEMENT

Embodiments of the present techniques have been described with reference to several inventive features (e.g., operations, systems, engines, and components) associated with a cloud access management system. Inventive features described include: operations, interfaces, data structures, and arrangements of computing resources associated with providing the functionality described herein relative with reference to a speculation management engine. Functionality of the embodiments of the present invention have further been described, by way of an implementation and anecdotal examples - to demonstrate that the operations for providing the speculation management engine as a solution to a specific problem in connection management technology to improve computing operations in cloud access management systems.

By way of example, the speculation management engine supports aggregating speculation data (e.g., user data, local client data, and remote resource data) and employing a multi-dimensional speculation framework to identified remote resource connection candidates. The speculation management engine strategically executes partitioned operations (i.e., remote resource resolution operations and remote resource connection configuration operations) to resolve a remote client protocol file, while preemptively configuring a connection to a speculated remote source; such that, a preemptively configured remote resource connection is employed for a speculated remote resource when the speculated remote resource is correct. In this way, the speculation management engine can operate to enable local clients to more efficiently (e.g., instantly and timely) connect to remote clients and other cloud-based resources. The speculation management resources are a solution to a specific problem (e.g., limitations in instant and timely connections to remote clients and cloud-based resources). Moreover, the speculation management engine can support different speculation approaches (e.g., remote client specification matching approach, schedule-based approach, location-based approach, default remote client approach, last connected remote client approach and corresponding speculation data) that are executed based on corresponding speculation data.

### ADDITIONAL SUPPORT FOR DETAILED DESCRIPTION

### EXAMPLE CLOUD ACCESS MANAGEMENT SYSTEM IN A COMPUTING ENVIRONMENT

Referring now to FIG. 6, FIG. 6 illustrates a computing environment in which implementations of the present disclosure may be employed. In particular, FIG. 6 shows a high level architecture of an example cloud computing platform 600 and cloud access management system 610 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing environment 100 provides computing system resources for different types of managed computing environments. For example, the cloud computing platform supports delivery of computing services - including compute, servers, storage, databases, networking, and intelligence. The components of cloud computing environment 600 may communicate with each other over a network 600A which may include, without limitation, one or more local area networks (LANs) and/or wide area networks (WANs).

The cloud access management system 610 provides cloud access management functionality for different types of cloud computing offerings. The cloud access management system can be a centralized platform designed to facilitate secure and efficient access to cloud-based resources from various devices, including traditional desktops, laptops, and thin clients. The cloud access management system can include software, hardware, and infrastructure components that enable users to authenticate, connect, and interact with remote resources hosted in the cloud. The cloud access management system manages operations associated with user identities, permissions, and access policies to ensure that only authorized users can access specific resources. Additionally, it may incorporate features such as single sign-on (SSO), multi-factor authentication (MFA), and session management to enhance security and user experience.

Cloud access management system 610 enables secure and efficient access for local clients to remote resources, such as remote clients, through a centralized platform. It encompasses authentication mechanisms to verify the identities of users and devices seeking access, including multi-factor authentication for enhanced security. Authorization protocols govern user permissions and access levels, dictating which resources or applications each user can utilize. Session management functionalities handle the establishment, monitoring, and termination of user sessions, optimizing performance while ensuring compliance with security policies. The cloud access management system also manages connections between local clients and remote clients, employing robust encryption and data integrity measures to protect sensitive information during transmission.

The cloud access management system 610 includes a cloud access management engine 620 that is a computing environment that supports executing computational tasks associated with the cloud access management system 610. The cloud access management engine 620 can be a hardware or software component that performs computational operations, such as, mathematical calculations, data processing, and algorithm execution. The cloud access management system 610 integrates cloud access management resources 630 into cloud access management system 610 to effectively provide cloud access management in a computing environment.

The cloud access management resources 630 refer to computing elements (e.g., components, capability, or entities) that collectively enable the cloud access management engine 620 operations. The cloud access management resources 630 encompass a spectrum of computing elements, beginning with the diverse operations the cloud access management resources 630 can perform, ranging from complex computations to data manipulations. Interfaces, an integral part of the cloud access management resources 630, provide the means for both user interaction and seamless integration with external systems, ensuring a dynamic and interactive computing experience. The data facet of the cloud access management resources 630 involves various types: input data, which is the information provided for processing; processing data, representing the data manipulated during computational tasks; and output data, the results generated by the cloud access management engine 620. In this way, the cloud access management resources 630 support the broader cloud access management engine 620 and cloud access management system 610.

The cloud access management resources can include speculation management resources (e.g., speculation management resources 112) that encompass the core operations, interfaces, and data components within cloud access management system 110, collectively supporting its functionality in overseeing diverse devices across the cloud computing system 100. Operations within the speculation management engine 110 speculative resource access, prefetching, speculation handling, machine learning, resource caching, and speculation timeout mechanisms. These operations are facilitated through interfaces such as speculation management, remote resource access, cache management, machine learning integration, and user interaction interfaces. Data components include speculation metadata, cached resource data, user interaction data, and speculation policies, which collectively inform speculation management decisions. Through these interconnected elements, the system aims to optimize resource utilization, reduce latency, and enhance user experience by intelligently anticipating and managing access to remote resources.

The cloud access management system 610 provisions remote clients (e.g., remote client 640). A remote client 640 can be virtual desktop environment (e.g., Desktop as a Service - DaaS). The remote client 640 leverages virtualization, cloud computing, and network technologies to deliver scalable, secure, and cost-effective virtual desktop environments to users, enabling flexible remote access to computing resources from any location, on any device. DaaS providers provide Virtualized Desktop Infrastructures (VDI) that host virtual desktops on servers in their data centers. These virtual desktops are created using virtualization technologies such as hypervisors or containerization platforms. Each virtual desktop includes an operating system, applications, data, and user settings.

The local client 650 connects to the remote client 640. The local client 650 can be a software application or device installed or used on the end-user's local hardware, such as a desktop computer, laptop, thin client, or mobile device. This client software facilitates the remote connection to the VDI hosted by the remote client provider, allowing end-users to access their virtual desktop environments over the internet. Local client 650 can be a managed client that is centrally controlled and monitored by cloud access management system 610. Managed clients typically have device management software installed or configured on them, allowing administrators to enforce security policies, configure settings, deploy applications, and perform remote management tasks. The local client 650 can be an unmanaged client that operates independently without being centrally controlled or monitored. These devices lack device management software or configurations, and users have full control over their settings and applications.

The cloud access management client 660 supports access to cloud access management system 610. Cloud access management client 660 provides a graphical or command-line interface for users or administrators to monitor and manage user sessions to ensure proper termination, timeout, and session activity logging. Configuring authentication methods such as passwords, multi-factor authentication (MFA), biometrics, or single sign-on (SSO) to verify user identities, and setting up authorization rules and permissions to govern user access to specific resources, applications, or data. The cloud access management client 660 supports centralized access management within a computing environment empowering efficient access administration.

### EXAMPLE DISTRIBUTED COMPUTING SYSTEM ENVIRONMENT

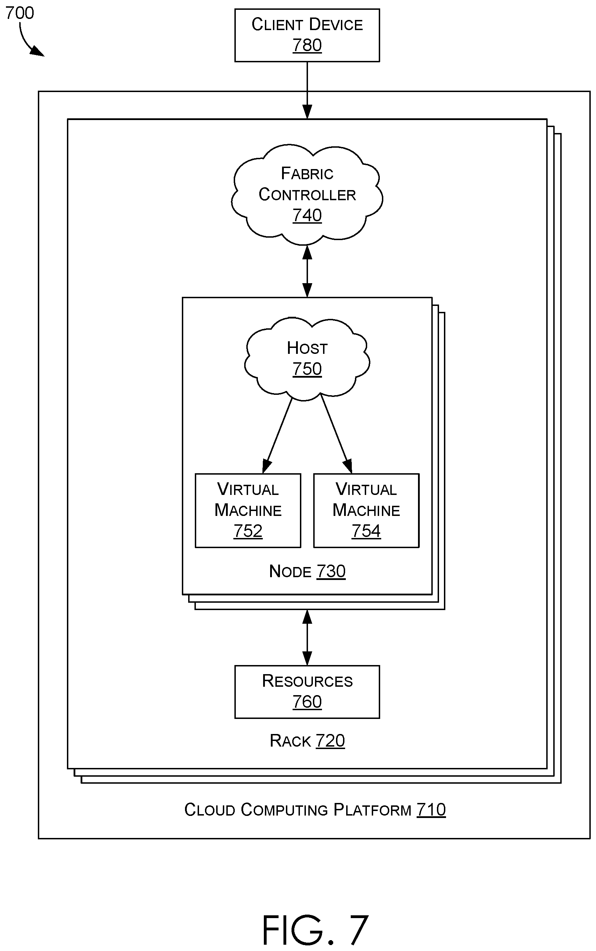

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### EXAMPLE COMPUTING ENVIRONMENT

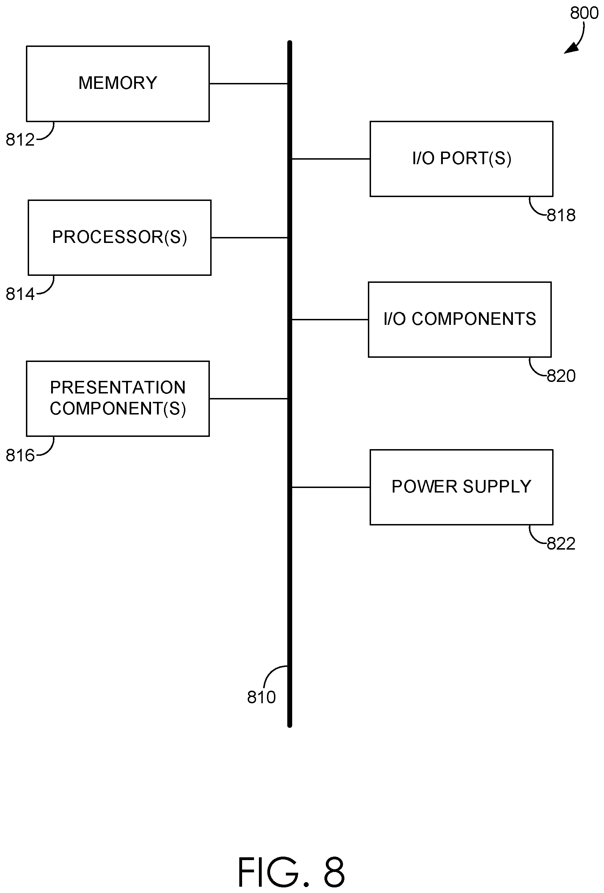

Having briefly described an overview of embodiments of the present technical solution, an example operating environment in which embodiments of the present technical solution may be implemented is described below in order to provide a general context for various aspects of the present technical solution. Referring initially to FIG. 8 in particular, an example operating environment for implementing embodiments of the present technical solution is shown and designated generally as computing device 800. Computing device 800 is but one example of a suitable computing environment and is not intended to suggest any limitation as to the scope of use or functionality of the technical solution. Neither should computing device 800 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present technical solution. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

The present disclosure is supplemented by the following example clauses:
Example 1: A computerized system comprising: one or more computer processors; and computer memory storing computer-useable instructions that, when used by the one or more computer processors, cause the one or more computer processors to perform operations, the operations comprising: accessing speculation data for a user associated with a local client that enables access to remote resources; based on the speculation data, determining a plurality of speculated remote resource candidates; triggering execution of a first set of operations and a second set of operations, the first set of operations associated with remote resource resolution, and the second set of operations associated with remote resource connection configuration, wherein the second set of operations is executed for each of the plurality of speculated remote resource candidates; based on executing the first set of operations and the second set of operations, determining whether a remote resource identified from the remote resource resolution matches a speculated remote resource candidate in the plurality of speculated remote resource candidates; and based on determining that the speculated remote resource candidate matches the remote resource, establishing a connection for the remote resource.
Example 2: The system of Example 1, wherein the speculation data is associated with a multi-dimensional speculation framework comprising two or more speculation approaches, wherein each speculation approach is associated with corresponding speculation data that enables performing the speculation approach.
Example 3: The system of Example 2, wherein the speculation approaches are selected from the following: a remote client specification matching approach; a schedule-based approach; a location-based approach; a default remote client approach; and a last connected remote client approach.
Example 4: The system of Example 1, wherein the speculation data comprises two or more of the following: a local application history; an estimated typical system requirements profile; a machine learning model; a user schedule; a user location; remote resource data; a last connected remote client; and a default remote client.
Example 5: The system of Example 1, wherein the first set of operations and the second set of operations are executed in parallel.
Example 6: The system of Example 1, the operations further comprising de-duplicating duplicate speculated remote resource candidates identified in the plurality of speculated remote resource candidates.
Example 7: The system of Example 1, wherein determining whether the remote resource identified from the remote resource resolution matches the speculated remote resource candidate in the plurality of speculated remote resource candidates is triggered based on a user indication to connect to the remote resource.
Example 8: The system of Example 1, the operations further comprising: storing data associated with the user, wherein the data is stored as speculation data that enables speculation management based on execution of the first set of operations and the second set of operations.
Example 9: The system of Example 8, the operations further comprising: based on the speculation data associated with the user, determining a second plurality of speculated remote resource candidates; triggering execution of the first set of operations and the second set of operations, wherein the second set of operations is executed for each of the second plurality of speculated remote resource candidates; based on executing the first set of operations and the second set of operations, determining whether a second remote resource identified from a second remote resource resolution matches a speculated remote resource candidate in the second plurality of speculated remote resource candidates; determining that the second remote resource does not match a speculated remote resource candidate in the second plurality of speculated remote resource candidates; based on determining that the second remote resource does not match, executing the second set of operations to connect to the second remote resource; and based on executing the second set of operations, establishing a connection for the second remote resource.
Example 10: One or more computer-storage media having computer-executable instructions embodied thereon that, when executed by a computing system having a processor and memory, cause the processor to perform operations, the operations comprising: identifying a user associated with a local client that enables access to remote resources; determining that speculation data does not exist for the user; and storing data associated with the user, wherein the data is stored as speculation data that enables speculation management based on execution of a first set of operations and a second set of operations, the first set of operations associated with remote resource resolution, and the second set of operations associated with remote resource connection configuration.
Example 11: The media of Example 10, wherein the speculation data is associated with a multi-dimensional speculation framework comprising two or more speculation approaches, wherein each speculation approach is associated with corresponding speculation data that enables performing the speculation approach.
Example 12: The media of Example 10, the operations further comprising: accessing the speculation data for the user; based on the speculation data, identifying at least one speculated remote resource candidate; based on the at least one speculated remote resource candidate, triggering execution of the first set of operations and the second set of operations; and based on executing the first set of operations and the second set of operations establishing a connection for a remote connection based on a speculated remote resource associated with the at least one remote resource candidate.
Example 13: The media of Example 12, wherein the speculated remote resource of the at least one speculated remote resource is selected based on the speculated remote resource matching the remote resource identified from the remote resource solution of the first set of operations.
Example 14: The media of Example 10, the operations further comprising: upon determining that the speculation data does not exist, executing a first set of operations for remote resource resolution; based on executing the first set of operations, identifying a remote resource; executing the second of operation for remote resource connection configuration; and establishing a connection for the remote resource.
Example 15: The media of Example 10, the operations further comprising: accessing the speculation data associated with the user; based on the speculation data, determining a plurality of speculated remote resource candidates; triggering execution of the first set of operations and the second set of operations, wherein the second set of operations is executed for each of the plurality of speculated remote resource candidates; based on executing the first set of operations and the second set of operations, determining whether a remote resource identified from the remote resource resolution matches a speculated remote resource candidate in the plurality of speculated remote resource candidates; and based on determining that the speculated remote resource candidate matches the remote resource, establishing a connection with the remote resource.
Example 16: The media of Example 10, the operations further comprising: accessing the speculation data associated with the user; based on speculation data, determining a plurality of speculated remote resource candidates; triggering execution of the first set of operations and the second set of operations, wherein the second set of operations are executed for each of the plurality of speculated remote resource candidates; based on executing the first set of operations and the second set of operations, determining whether a remote resource identified from the remote resource resolution matches a speculated remote resource candidate in the plurality of speculated remote resource candidates; determining that the remote resource does not match a speculated remote resource candidate in the plurality of speculated remote resource candidates; based on determining remote resource does match, executing the second set of operations; and based on executing the second set of operations, establishing a connection with the remote resource.
Example 17: A computer-implemented method, the method comprising: accessing speculation data associated with a user; based on the speculation data, identifying at least one speculated remote resource candidate; based on the at least one speculated remote resource candidate, triggering execution of a first set of operations and a second set of operations, the first set of operations associated with remote resource resolution, and the second set of operations associated with remote resource connection configuration; and based on executing the first set of operations and the second set of operations, establishing a connection for a speculated remote resource associated with the at least one speculated remote resource candidate.
Example 18: The method of Example 17, wherein the speculation data is associated with a multi-dimensional speculation framework comprising two or more speculation approaches, wherein each speculation approach is associated with corresponding speculation data that enables performing the speculation approach.
Example 19: The method of Example 17, wherein the at least one speculated remote resource candidate is a single resource associated with the user that causes circumvention of identification of a plurality of speculated remote resource candidates.
Example 20: The method of Example 19, wherein speculated remote resource of the at least one speculated remote resource is selected based on the speculated remote resource matching the remote resource identified from the remote resource solution of the first set of operations.

Described are methods, systems, and computer storage media for providing speculation management using a speculation management engine of a cloud access management system. The speculation management engine operates based on speculation data, a multi-dimensional speculation framework, and two sets of operations defined based on an initialization sequence. In operation, speculation data for a user associated with a local client is accessed. A determination of a plurality of speculated remote resource candidates is made, based on the speculation data associated with the user. Execution of a first set of operations (i.e., remote resource resolution) and a second set of operations (i.e., remote resource connection configuration) are triggered. A determination is made whether a remote resource identified from the remote resource resolution matches a speculated remote resource candidate in the plurality of speculated remote resource candidates. Based on the speculated remote resource candidate, a connection for accessing a remote resource is established.

### ADDITIONAL STRUCTURAL AND FUNCTIONAL FEATURES OF EMBODIMENTS OF THE TECHNICAL SOLUTION

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
accessing (302) speculation data for a user associated with a local client that enables access to remote resources;
based on the speculation data, determining (304) a plurality of speculated remote resource candidates;
triggering (306) execution of a first set of operations and a second set of operations, the first set of operations associated with remote resource resolution, and the second set of operations associated with remote resource connection configuration, wherein the second set of operations is executed for each of the plurality of speculated remote resource candidates;
based on executing the first set of operations and the second set of operations, determining (308) whether a remote resource identified from the remote resource resolution matches a speculated remote resource candidate in the plurality of speculated remote resource candidates; and
based on determining that the speculated remote resource candidate matches the remote resource, establishing (310) a connection for the remote resource.

2. The system of claim 1, wherein the speculation data is associated with a multi-dimensional speculation framework comprising two or more speculation approaches, wherein each speculation approach is associated with corresponding speculation data that enables performing the speculation approach.

3. The system of claim 2, wherein the speculation approaches are selected from the following:
a remote client specification matching approach;
a schedule-based approach;
a location-based approach;
a default remote client approach; and
a last connected remote client approach.

4. The system of claim 1, wherein the speculation data comprises two or more of the following: a local application history; an estimated typical system requirements profile; a machine learning model; a user schedule; a user location; remote resource data; a last connected remote client; and a default remote client.

5. The system of claim 1, wherein the first set of operations and the second set of operations are executed in parallel.

6. The system of claim 1, the operations further comprising de-duplicating duplicate speculated remote resource candidates identified in the plurality of speculated remote resource candidates.

7. The system of claim 1, wherein determining whether the remote resource identified from the remote resource resolution matches the speculated remote resource candidate in the plurality of speculated remote resource candidates is triggered based on a user indication to connect to the remote resource.

8. The system of claim 1, the operations further comprising:
storing data associated with the user, wherein the data is stored as speculation data that enables speculation management based on execution of the first set of operations and the second set of operations.

9. The system of claim 8, the operations further comprising:
based on the speculation data associated with the user, determining a second plurality of speculated remote resource candidates;
triggering execution of the first set of operations and the second set of operations, wherein the second set of operations is executed for each of the second plurality of speculated remote resource candidates;
based on executing the first set of operations and the second set of operations, determining whether a second remote resource identified from a second remote resource resolution matches a speculated remote resource candidate in the second plurality of speculated remote resource candidates;
determining that the second remote resource does not match a speculated remote resource candidate in the second plurality of speculated remote resource candidates;
based on determining that the second remote resource does not match, executing the second set of operations to connect to the second remote resource; and
based on executing the second set of operations, establishing a connection for the second remote resource.

10. One or more computer-storage media having computer-executable instructions embodied thereon that, when executed by a computing system having a processor and memory, cause the processor to perform operations, the operations comprising:
identifying (402) a user associated with a local client that enables access to remote resources;
determining (404) that speculation data does not exist for the user; and
storing (406) data associated with the user, wherein the data is stored as speculation data that enables speculation management based on execution of a first set of operations and a second set of operations, the first set of operations associated with remote resource resolution, and the second set of operations associated with remote resource connection configuration.

11. The media of claim 10, the operations further comprising:
accessing the speculation data for the user;
based on the speculation data, identifying at least one speculated remote resource candidate;
based on the at least one speculated remote resource candidate, triggering execution of the first set of operations and the second set of operations; and
based on executing the first set of operations and the second set of operations establishing a connection for a remote connection based on a speculated remote resource associated with the at least one remote resource candidate.

12. The media of claim 11, wherein the speculated remote resource of the at least one speculated remote resource is selected based on the speculated remote resource matching the remote resource identified from the remote resource solution of the first set of operations.

13. The media of claim 10, the operations further comprising:
upon determining that the speculation data does not exist, executing a first set of operations for remote resource resolution;
based on executing the first set of operations, identifying a remote resource;
executing the second of operation for remote resource connection configuration; and
establishing a connection for the remote resource.

14. The media of claim 10, the operations further comprising:
accessing the speculation data associated with the user;
based on the speculation data, determining a plurality of speculated remote resource candidates;
triggering execution of the first set of operations and the second set of operations, wherein the second set of operations is executed for each of the plurality of speculated remote resource candidates;
based on executing the first set of operations and the second set of operations, determining whether a remote resource identified from the remote resource resolution matches a speculated remote resource candidate in the plurality of speculated remote resource candidates; and
based on determining that the speculated remote resource candidate matches the remote resource, establishing a connection with the remote resource.

15. A computer-implemented method, the method comprising:
accessing (502) speculation data associated with a user;
based on the speculation data, identifying (504) at least one speculated remote resource candidate;
based on the at least one speculated remote resource candidate, triggering (506) execution of a first set of operations and a second set of operations, the first set of operations associated with remote resource resolution, and the second set of operations associated with remote resource connection configuration; and
based on executing the first set of operations and the second set of operations, establishing (510) a connection for a speculated remote resource associated with the at least one speculated remote resource candidate.
